# EUROPÄISCHE PATENTANMELDUNG

(11) **EP 3 096 371 A1**
(43) Veröffentlichungstag der Anmeldung: **23.11.2016**
(21) Anmeldenummer: 15167971.9
(22) Anmeldetag: 18.05.2015
(51) Int. Cl.: H01M 2/02, H01M 2/26, H01M 10/04

(54) **BATTERIEZELLE**

(71) Anmelder: Lithium Energy and Power GmbH & Co. KG, 70469 Stuttgart (DE)
(72) Erfinder: Berg, Anselm, 71640 Ludwigsburg (DE); Riefler, Michael, 72768 Reutlingen (DE)
(74) Vertreter: Bee, Joachim

(57) **Zusammenfassung**

Die Erfindung betrifft eine Batteriezelle (2), umfassend ein Zellengehäuse (3) und einen innerhalb des Zellengehäuses (3) angeordneten Elektrodenwickel (10) mit einer Kathode (14) und mit einer Anode (16), welche um einen Wickelkern (65) gewickelt sind. Dabei ist der Wickelkern (65) aus einem elektrisch leitfähigen Material gefertigt, und der Wickelkern (65) ist mit einem Teil (13, 23) des Zellengehäuses (3) verbunden.

## Beschreibung

Die Erfindung betrifft eine Batteriezelle, welche ein Zellengehäuse und einen innerhalb des Zellengehäuses angeordneten Elektrodenwickel mit einer Kathode und mit einer Anode umfasst, wobei die Kathode und die Anode um einen Wickelkern gewickelt sind.

### Stand der Technik

Es zeichnet sich ab, dass in Zukunft sowohl bei stationären Anwendungen, wie Windkraftanlagen, in Kraftfahrzeugen, die als Hybridfahrzeuge oder Elektrokraftfahrzeuge ausgelegt sind, als auch bei Elektronikgeräten, wie Laptops oder Mobiltelefonen, neue Batteriesysteme zum Einsatz kommen werden, an die sehr hohe Anforderungen bezüglich Zuverlässigkeit, Sicherheit, Leistungsfähigkeit und Lebensdauer gestellt werden.

Hierbei finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen weisen eine positive und eine negative Elektrode auf, an denen Lithium-Ionen bei einem Ladevorgang sowie bei einem Entladevorgang reversibel einlagern sowie wieder auslagern können. Ein solcher Vorgang wird auch als Interkalation, beziehungsweise Deinterkalation bezeichnet.

Eine Batteriezelle umfasst in der Regel eine oder mehrere Elektrodeneinheiten, welche in Form einer Wicklung ausgestaltet sind. Eine Elektrodeneinheit weist zwei folienartig ausgebildete Elektroden auf, nämlich eine Anode und eine Kathode. Die Elektroden sind unter Zwischenlage eines Separators zu einem Elektrodenwickel, welcher auch als Jelly-Roll bezeichnet wird, gewunden. Die beiden Elektroden des Elektrodenwickels werden mittels Kollektoren elektrisch mit Polen der Batteriezelle, welche auch als Terminals bezeichnet werden, verbunden.

Eine Batteriezelle weist ferner ein Zellengehäuse auf, welches beispielsweise aus Aluminium besteht. Das Zellengehäuse ist in der Regel prismatisch, insbesondere quaderförmig, ausgestaltet und druckfest ausgebildet. Nach dem Verbinden der Elektroden mit den Terminals wird eine Elektrolytlösung in das Zellengehäuse gefüllt.

Aus der EP 2 675 000 A1 ist eine gattungsgemäße Batteriezelle mit einem Elektrodenwickel bekannt. Die Anode und die Kathode ragen dabei an entgegengesetzten Seiten parallel zu der Wickelachse aus dem Elektrodenwickel heraus und sind an je einen Kollektor angeschlossen. Die beiden Kollektoren verlaufen im Wesentlichen senkrecht zu der Wickelachse des Elektrodenwickels und verbinden die Anode und die Kathode mit den Terminals.

In der DE 10 2008 034 696 A1 ist ein Batteriezelle, insbesondere für Kraftfahrzeuge offenbart, welche ein zylindrisches Zellgehäuse aufweist, in welchem ein Elektrodenwickel angeordnet ist. Der Elektrodenwickel ist um einen Wickeldorn gewickelt und umfasst zwei Elektroden, welche an der gleichen Stirnseite aus dem Elektrodenwickel herausragen und mit nebeneinander liegenden Terminals verbunden sind.

Die DE 10 2007 017 024 B3 offenbart eine Batteriezelle mit einem Elektrodenwickel, welcher auf einen Wickelkern aufgewickelt ist. Mittels einer Formpresse ist der Elektrodenwickel der Batteriezelle in eine andere Querschnittsform, beispielsweise rund, quadratisch oder auch dreieckig, umformbar.

Aus der DE 10 2012 018 040 A1 geht eine Einzelzelle für eine Batterie hervor, welche ein Zellgehäuse und einen Elektrodenwickel aufweist, sowie auch ein Verfahren zur Herstellung einer solchen Einzelzelle. Der Elektrodenwickel ist dabei auf einen Wickeldorn gewickelt und mit Polkontakten kontaktiert, welche aus dem Zellgehäuse heraus ragen.

### Offenbarung der Erfindung

Es wird eine Batteriezelle vorgeschlagen, welche ein Zellengehäuse und einen innerhalb des Zellengehäuses angeordneten Elektrodenwickel mit einer Kathode und mit einer Anode umfasst. Die Kathode und die Anode sind dabei um einen Wickelkern herum gewickelt.

Erfindungsgemäß ist der Wickelkern aus einem elektrisch leitfähigen Material gefertigt und mit einem Teil des Zellengehäuses der Batteriezelle verbunden. Insbesondere ist der Wickelkern dabei mechanisch sowie auch elektrisch mit dem Teil des Zellengehäuses der Batteriezelle verbunden.

Das Zellengehäuse weist dabei mehrere Teile auf, wobei ein Teil ein Behälter und ein anderes Teil eine Deckplatte ist. Der Behälter ist dabei von der Deckplatte verschlossen.

Gemäß einer vorteilhaften Ausgestaltung der Erfindung ist der Wickelkern dabei mit der Deckplatte des Zellengehäuses verbunden.

Gemäß einer anderen vorteilhaften Ausgestaltung der Erfindung ist der Wickelkern dabei mit dem Behälter des Zellengehäuses verbunden.

Vorzugsweise ist der Wickelkern in diesem Fall mit einer der Deckplatte gegenüberliegenden Bodenfläche des Behälters verbunden.

Der Wickelkern der Batteriezelle ist bevorzugt aus Aluminium gefertigt.

Besonders bevorzugt ist der Wickelkern mit der Kathode des Elektrodenwickels verbunden.

Ferner ist das Zellengehäuse der Batteriezelle bevorzugt elektrisch leitend ausgeführt.

Vorzugsweise ist der Wickelkern dabei mit dem Teil des Zellengehäuses, also insbesondere mit der Deckplatte oder mit dem Behälter, verschweißt, insbesondere mittels Widerstandschweißens.

Vorzugsweise ist das Zellengehäuse der Batteriezelle prismatisch, insbesondere quaderförmig, ausgestaltet.

Eine erfindungsgemäße Batteriezelle findet vorteilhaft Verwendung in einem Elektrofahrzeug (EV), in einem Hybridfahrzeug (HEV), oder in einem Plug-In-Hybridfahrzeug (PH EV).

### Vorteile der Erfindung

Eine erfindungsgemäße Batteriezelle zeichnet sich insbesondere durch eine hohe mechanische Festigkeit des Elektrodenwickels aus, welcher durch den Wickelkern sowie dessen mechanische Befestigung an dem Zellengehäuse stabilisiert ist. Wenn der Wickelkern elektrisch mit einer Elektrode, vorzugsweise mit der Kathode, verbunden ist, so kann der Wickelkern gleichzeitig als Kollektor genutzt werden. Dadurch kann ein separater Kollektor für die Elektrode entfallen, wodurch die Batteriezelle ein verringertes Gewicht aufweist. Auch kann in diesem Fall ein separates Terminal entfallen, wenn das Zellengehäuse selbst als elektrischer Anschluss extern kontaktierbar ist. Durch die Verbindung des Elektrodenwickels mit dem Zellengehäuse durch Schweißen ergibt sich ein verhältnismäßig geringer Übergangswiderstand bei gleichzeitig hoher mechanischer Stabilität. Auch ist durch die Befestigung des Wickelkerns und damit des Elektrodenwickels an dem Zellengehäuse die Fertigung der Batteriezelle vereinfacht durchführbar.

Wenn der Elektrodenwickel an der Deckplatte des Zellengehäuses befestigt ist, so befindet sich der Kollektor der anderen Elektrode, also vorzugsweise der Anode, an derselben Stirnseite des Elektrodenwickels, an welcher auch der Wickelkern aus dem Elektrodenwickel auf die Deckplatte zu herausragt. Somit kann sich der Elektrodenwickel weiter entlang seiner Wickelachse in Richtung auf die der Deckplatte gegenüberliegende Bodenfläche des Behälters zu erstrecken. Dadurch weist der Elektrodenwickel eine höhere Kapazität, beziehungsweise eine höhere Energiedichte, auf.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische, halbtransparente Darstellung einer Batteriezelle gemäß einer ersten Ausführungsform,
- Figur 2: eine schematische, halbtransparente Darstellung einer Batteriezelle gemäß einer zweiten Ausführungsform und
- Figur 3: eine schematische Darstellung eines Schnittes durch die innere Wickellage eines Elektrodenwickels der Batteriezelle entlang seiner Wickelachse.

### Ausführungsformen der Erfindung

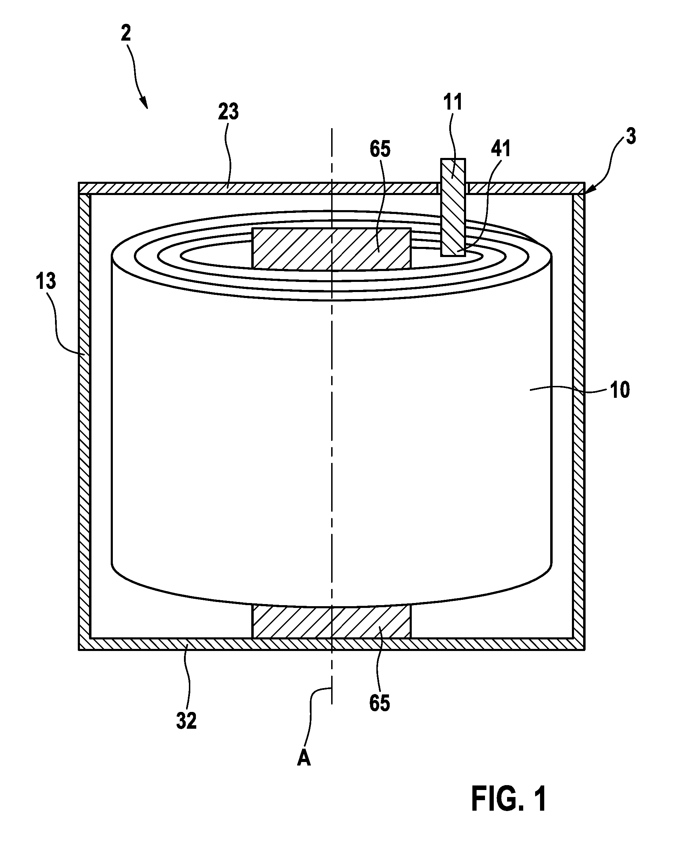

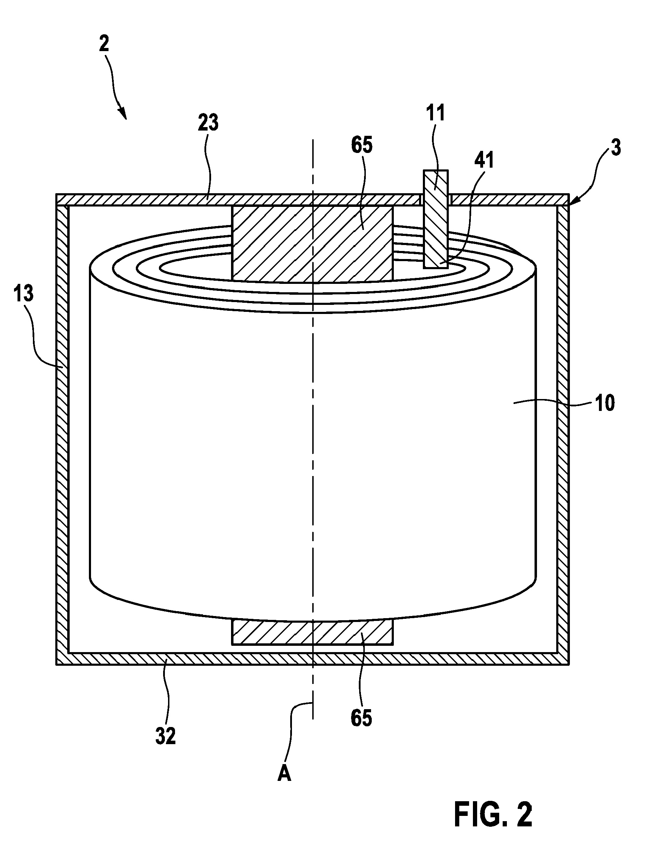

In Figur 1 ist eine erste Ausführungsform einer Batteriezelle 2 dargestellt. In Figur 2 ist eine zweite Ausführungsform einer Batteriezelle 2 dargestellt. Die Batteriezelle 2 gemäß der ersten Ausführungsform sowie auch die Batteriezelle 2 gemäß der zweiten Ausführungsform umfassen jeweils ein Zellengehäuse 3, welches prismatisch, vorliegend quaderförmig, ausgebildet ist.

Das Zellengehäuse 3 ist vorliegend elektrisch leitend ausgeführt und beispielsweise aus Aluminium gefertigt. Das Zellengehäuse 3 umfasst einen quaderförmigen Behälter 13, welcher an einer Seite eine Behälteröffnung aufweist. Die Behälteröffnung wird durch eine Deckplatte 23 verschlossen. Der quaderförmigen Behälter 13 und die Deckplatte 23 des Zellengehäuses 3 sind dabei jeweils elektrisch leitend ausgeführt und vorliegend aus Aluminium gefertigt.

Aber auch andere Ausführungsformen des Zellgehäuses 3, beispielsweise zylindrisch, insbesondere kreiszylindrisch, sind denkbar.

Die Batteriezelle 2 umfasst ein negatives Terminal 11, welches aus der Deckplatte 23 des Zellengehäuses 3 heraus ragt. Das Zellengehäuse 3 fungiert selbst als positives Terminal. Die Batteriezelle 2 kann aber auch ein separates positives Terminal aufweisen, welches aus dem Zellengehäuse 3, insbesondere aus der Deckplatte 23, heraus tagt.

Über das negative Terminal 11 und das positive Terminal kann eine von der Batteriezelle 2 zur Verfügung gestellte Spannung abgegriffen werden. Ferner kann die Batteriezelle 2 über das negative Terminals 11 und das positive Terminal auch geladen werden.

Innerhalb des Zellengehäuses 3 der Batteriezelle 2 ist ein Elektrodenwickel 10 angeordnet, welcher zwei Elektroden, nämlich eine Kathode 14 und eine Anode 16, aufweist. Die Kathode 14 und die Anode 16 sind folienartig ausgeführt und unter Zwischenlage eines ersten Separators 18 und eines zweiten Separators 19 um eine Wickelachse A zu dem Elektrodenwickel 10 gewickelt.

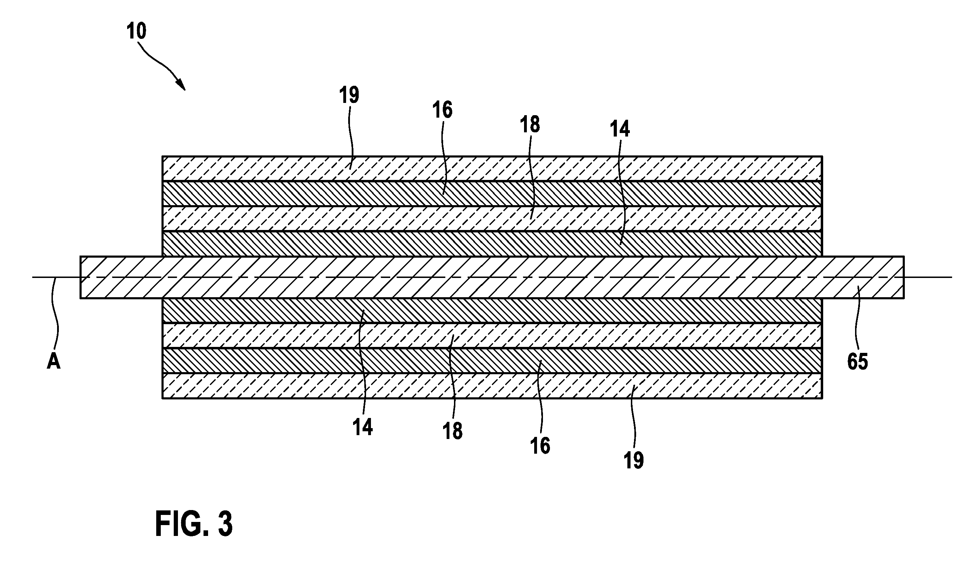

Eine schematische Darstellung eines Schnittes durch die innere Wickellage des Elektrodenwickels 10 der Batteriezelle 2 entlang seiner Wickelachse A ist in Figur 3 dargestellt. Auch die Separatoren 18, 19 sind folienartig ausgeführt. Innerhalb des Zellengehäuses 3 ist ferner ein Elektrolyt vorhanden.

Der Elektrodenwickel 10 ist derart in dem Zellengehäuse 3 angeordnet, dass die Wickelachse A rechtwinklig zu der Deckplatte 23 sowie rechtwinklig zu einer der Deckplatte 23 gegenüberliegenden Bodenfläche 32 des Zellengehäuses 3 verläuft. Es ist auch denkbar, dass die Batteriezelle 2 mehrere Elektrodenwickel 10 umfasst.

Der Elektrodenwickel 10 umfasst ferner einen Wickelkern 65, um welchen die Kathode 14 und die Anode 16 unter Zwischenlage des ersten Separators 18 und des zweiten Separators 19 herum in mehreren Wickellagen gewickelt sind. Die Wickelachse A verläuft durch den Wickelkern 65 hindurch. Der Wickelkern 65 ist dabei aus einem elektrisch leitfähigen Material, vorliegend aus Aluminium, gefertigt.

Die folienartig ausgebildete Kathode 14 umfasst einen folienartig ausgebildeten Stromableiter, welcher mit einem kathodischen Aktivmaterial beschichtet ist. Der folienartig ausgebildete Stromableiter der Kathode 14 ist vorliegend aus Aluminium gefertigt.

Die folienartig ausgebildete Anode 16 umfasst einen folienartig ausgebildeten Stromableiter, welcher mit einem anodischen Aktivmaterial beschichtet ist. Der folienartig ausgebildete Stromableiter der Anode 16 ist vorliegend aus Kupfer gefertigt.

An der inneren, dem Wickelkern 65 zugewandten Wickellage des Elektrodenwickels 10 liegt die Kathode 14 unmittelbar an dem Wickelkern 65 an. Dabei ist der aus Aluminium gefertigte Stromableiter der Kathode 14 elektrisch mit dem ebenfalls aus Aluminium gefertigten Wickelkern 65 verbunden.

Der Elektrodenwickel 10 ist annähernd zylinderförmig ausgestaltet. Dabei erstreckt sich der Wickelkern 65 weiter entlang der Wickelachse A als die Kathode 14, die Anode 16 sowie die Separatoren 18, 19. Der Wickelkern 65 ragt somit beidseitig aus den Stirnseiten des annähernd zylinderförmig ausgestalteten Elektrodenwickels 10 heraus. Es ist auch denkbar, dass der Wickelkern 65 nur auf einer Seite aus der Stirnseite des annähernd zylinderförmig ausgestalteten Elektrodenwickels 10 heraus ragt.

Gemäß der ersten Ausführungsform der Batteriezelle 2, welche in Figur 1 dargestellt ist, ist der Wickelkern 65 des Elektrodenwickels 10 mit dem Behälter 13 des Zellengehäuses 3 verbunden. Vorliegend ist der Wickelkern 65 des Elektrodenwickels 10 dabei mit der Bodenfläche 32 des Behälters 13 des Zellengehäuses 3 verbunden.

Der aus Aluminium gefertigte Wickelkern 65 des Elektrodenwickels 10 ist dabei mit dem ebenfalls aus Aluminium gefertigten Behälter 13 des Zellengehäuses 3 verschweißt. Der Wickelkern 65 ist somit elektrisch und mechanisch mit dem Behälter 13 des Zellengehäuses 3 verbunden. Es besteht somit eine elektrische Verbindung zwischen der Kathode 14 über den Wickelkern 65 zu dem Behälter 13 des Zellengehäuses 3.

An der der Bodenfläche 32 des Behälters 13 des Zellengehäuses 3 gegenüberliegenden Seite ist der Wickelkern 65 geringfügig von der Deckplatte 23 des Zellengehäuses 3 beabstandet. Es ist aber auch denkbar, dass der Wickelkern 65 an der Deckplatte 23 des Zellengehäuses 3 anliegt.

Bei der Fertigung der Batteriezelle 2 gemäß der ersten Ausführungsform wird zunächst der Elektrodenwickel 10 durch die Behälteröffnung in den Behälter 13 des Zellengehäuses 3 eingeführt. Anschließend wird der Wickelkern 65 des Elektrodenwickels 10 mit der Bodenfläche 32 des Behälters 13 des Zellengehäuses 3 mittels einer Schweißanlage durch Widerstandschweißen verschweißt. Danach wird die Deckplatte 23 auf den Behälter 13 aufgesetzt und mit diesem zu dem Zellengehäuse 3 verschweißt.

Zum Widerstandschweißen des Wickelkerns 65 des Elektrodenwickels 10 mit der Bodenfläche 32 des Behälters 13 des Zellengehäuses 3 wird ein Pol der Schweißanlage mit dem Behälter 13 verbunden. Der andere Pol der Schweißanlage wird mit dem der Bodenfläche 32 des Behälters 13 des Zellengehäuses 3 abgewandten Ende des Wickelkerns 65 des Elektrodenwickels 10 verbunden.

Gemäß der zweiten Ausführungsform der Batteriezelle 2, welche in Figur 2 dargestellt ist, ist der Wickelkern 65 des Elektrodenwickels 10 mit der Deckplatte 23 des Zellengehäuses 3 verbunden, welche der Bodenfläche 32 des Behälters 13 des Zellengehäuses 3 gegenüber liegt.

Der aus Aluminium gefertigte Wickelkern 65 des Elektrodenwickels 10 ist dabei mit der ebenfalls aus Aluminium gefertigten Deckplatte 23 des Zellengehäuses 3 verschweißt. Der Wickelkern 65 ist somit elektrisch und mechanisch mit der Deckplatte 23 des Zellengehäuses 3 verbunden. Es besteht somit eine elektrische Verbindung zwischen der Kathode 14 über den Wickelkern 65 zu der Deckplatte 23 des Zellengehäuses 3.

An der der Deckplatte 23 des Zellengehäuses 3 gegenüberliegenden Seite ist der Wickelkern 65 geringfügig von der Bodenfläche 32 des Behälters 13 des Zellengehäuses 3 beabstandet. Es ist aber auch denkbar, dass der Wickelkern 65 an der Bodenfläche 32 des Behälters 13 des Zellengehäuses 3 anliegt.

Bei der Fertigung der Batteriezelle 2 gemäß der zweiten Ausführungsform wird zunächst der Wickelkern 65 des Elektrodenwickels 10 mit der Deckplatte 23 des Zellengehäuses 3 mittels einer Schweißanlage durch Widerstandschweißen verschweißt. Anschließend wird der Elektrodenwickel 10 durch die Behälteröffnung in den Behälter 13 des Zellengehäuses 3 eingeführt und die Deckplatte 23 auf den Behälter 13 aufgesetzt. Danach wird die Deckplatte 23 mit dem Behälter 13 zu dem Zellengehäuse 3 verschweißt.

Zum Widerstandschweißen des Wickelkerns 65 des Elektrodenwickels 10 mit der Deckplatte 23 des Zellengehäuses 3 wird ein Pol der Schweißanlage mit der Deckplatte 23 verbunden. Der andere Pol der Schweißanlage wird mit dem der Deckplatte 23 des Zellengehäuses 3 abgewandten Ende des Wickelkerns 65 des Elektrodenwickels 10 verbunden.

Bei der ersten Ausführungsform sowie bei der zweiten Ausführungsform der Batteriezelle 2 ist es denkbar, dass in dem Elektrodenwickel 10 die Kathode 14 an zusätzlichen Stellen mit dem Wickelkern 65 verbunden ist. Dazu weist die Kathode 14 beispielsweise an mehreren Stellen, vorzugsweise in jeder Wickellage, Kathodenkontaktfahnen auf, welche auf einer Seite aus der Stirnseite des annähernd zylinderförmig ausgestalteten Elektrodenwickels 10 heraus ragen. Die Kathodenkontaktfahnen sind dabei mit dem Wickelkern 65 des Elektrodenwickels 10 verbunden.

Bei der ersten Ausführungsform sowie bei der zweiten Ausführungsform der Batteriezelle 2 ist die Anode 16 elektrisch mit dem negativen Terminal 11 verbunden. Dazu ist ein negativer Kollektor 41 vorgesehen. Vorliegend ist der negative Kollektor 41 einstückig mit dem negativen Terminal 11 ausgebildet. Der negative Kollektor 41 kann aber auch separate vom dem negativen Terminal 11 ausgebildet sein.

Dazu weist die Anode 16 beispielsweise an mehreren Stellen, vorzugsweise in jeder Wickellage, Anodenkontaktfahnen auf, welche elektrisch mit dem negativen Kollektor 41 der Batteriezelle 2 verbunden sind. Die Anodenkontaktfahnen ragen dabei aus der Stirnseite des annähernd zylinderförmig ausgestalteten Elektrodenwickels 10, welche der Deckplatte 23 des Zellengehäuses 3 zugewandt ist, heraus.

Die Erfindung ist nicht auf die beschriebenen Ausführungsbeispiele und die darin hervor gehobenen Aspekte beschränkt. Vielmehr ist innerhalb des durch die Ansprüche angegebenen Bereichs eine Vielzahl von Abwandlungen möglich, die im Rahmen des fachmännischen Handelns liegen.

## Patentansprüche

1. Batteriezelle (2), umfassend ein Zellengehäuse (3) und einen innerhalb des Zellengehäuses (3) angeordneten Elektrodenwickel (10) mit einer Kathode (14) und mit einer Anode (16),
welche um einen Wickelkern (65) gewickelt sind,
**dadurch gekennzeichnet, dass**
der Wickelkern (65) aus einem elektrisch leitfähigen Material gefertigt ist, und dass der Wickelkern (65) mit einem Teil (13, 23) des Zellengehäuses (3) verbunden ist.

2. Batteriezelle (2) nach Anspruch 1, **dadurch gekennzeichnet, dass** das Zellengehäuse (3) einen Behälter (13) aufweist,
welcher von einer Deckplatte (23) verschlossen ist, wobei der Wickelkern (65) mit der Deckplatte (23) verbunden ist.

3. Batteriezelle (2) nach Anspruch 1, **dadurch gekennzeichnet, dass** das Zellengehäuse (3) einen Behälter (13) aufweist,
welcher von einer Deckplatte (23) verschlossen ist, wobei der Wickelkern (65) mit dem Behälter (13) verbunden ist.

4. Batteriezelle (2) nach Anspruch 3, **dadurch gekennzeichnet, dass** der Wickelkern (65) mit einer der Deckplatte (23) gegenüberliegenden Bodenfläche (32) des Behälters (13) verbunden ist.

5. Batteriezelle (2) nach einem der vorstehenden Ansprüche, **dadurch gekennzeichnet, dass** der Wickelkern (65) aus Aluminium gefertigt ist.

6. Batteriezelle (2) nach einem der vorstehenden Ansprüche, **dadurch gekennzeichnet, dass** der Wickelkern (65) mit der Kathode (14) verbunden ist.

7. Batteriezelle (2) nach einem der vorstehenden Ansprüche, **dadurch gekennzeichnet, dass** das Zellengehäuse (3) elektrisch leitend ausgeführt ist.

8. Batteriezelle (2) nach einem der vorstehenden Ansprüche, **dadurch gekennzeichnet, dass** der Wickelkern (65) mit dem Teil (13, 23) des Zellengehäuses (3) verschweißt ist.

9. Batteriezelle (2) nach einem der vorstehenden Ansprüche, **dadurch gekennzeichnet, dass** das Zellengehäuse (3) prismatisch, insbesondere quaderförmig, ausgestaltet ist.

10. Verwendung einer Batteriezelle (2) nach einem der Ansprüche 1 bis 9 in einem Elektrofahrzeug (EV), in einem Hybridfahrzeug (HEV), oder in einem Plug-In-Hybridfahrzeug (PHEV).
